Europäisches Patentamt

European Patent Office

Office européen des brevets

(19)

(11) Veröffentlichungsnummer: **0 103 853**
**A2**

## (12) EUROPÄISCHE PATENTANMELDUNG

(21) Anmeldenummer: **83109112.9**

(22) Anmeldetag: **15.09.83**

(51) Int. Cl.³: **F 24 D 3/00**

(30) Priorität: **17.09.82 CH 5495/82**

(43) Veröffentlichungstag der Anmeldung:
**28.03.84 Patentblatt 84/13**

(84) Benannte Vertragsstaaten:
**AT BE DE FR NL**

(71) Anmelder: **Deria-Destra AG für Strahlungswärme**
**Höhestrasse 40 Postfach**
**CH-8702 Zollikon-Dorf(CH)**

(72) Erfinder: **Pfister, Jürg**
**Im Grossacher 6**
**CH-8123 Ebmatingen(CH)**

(74) Vertreter: **Sax, Walter F.**
**Rauchackerstrasse 28**
**CH-8102 Oberengstringen(CH)**

(54) Bodenheizungsanlage.

(57) Bei dieser Bodenheizungsanlage sind Heizrohre (5) mit an diesen festgeklemmten Wärmeleitblechen (4) zwischen einer tragenden Decke (1) und einem Unterlagsboden (6) auf einer den Wärmeabfluss nach unten hemmenden Dämmschicht (2, 3) angeordnet. Die Dämmschicht besteht aus einer Grundschicht (2) von einheitlicher Stärke und aus Materialstreifen (3), welche die Dämmschicht im Bereich der Heizungselemente (4, 5) verstärken. Die Stärke der Grundschicht (2) kann dabei geringerer sein, als sie sonst übliche gleichmässige Dämmschichten aufweisen. Dadurch lässt sich mit geringerem Materialaufwand eine verbesserte Wärmedämmung erzielen. Die separaten Materialstreifen (3) dienen zugleich als Träger der an diesen befestigten Wärmeleitbleche (4), was die Montage der Heizungsanlage erheblich erleichtert.

FIG. 1

Croydon Printing Company Ltd.

## Bodenheizungsanlage

Die Erfindung betrifft eine Bodenheizungsanlage, bei der Heizrohre mit an diesen festgeklemmten Wärmeleitblechen zwischen einer tragenden Decke und einem Unterlagsboden auf einer den Wärmeabfluss nach unten hemmenden Dämmschicht angeordnet sind.

Es ist bekannt, beim Aufbau von Bodenheizungsanlagen Dämmschichten in Form von Isolierplatten oder -matten anzuwenden, um den Wärmeabfluss nach unten zu hemmen. Besondere Bedeutung kommt solchen Dämmschichten zu, wenn unterhalb der die Heizungsanlage tragenden Decke wesentlich niedrigere Temperaturen herrschen können, als in dem zu beheizenden Raum, z.B. wenn die Decke auf Erdreich ruht oder über einem Raum liegt, der unbeheizt ist oder gar mit der Aussenluft in Verbindung steht. Gewöhnlich wird in solchen Extremfällen die ganze Bodenheizfläche mit einer den Verhältnissen entsprechend verstärkten Dämmschicht belegt.

Die Isolierplatten bekannter Bodenheizungsanlagen haben entweder einheitliche Stärke (DE-PS 1 022 780) oder sind mit Nuten zur Aufnahme der Heizrohre versehen (DE-AS 22 48 228, FR-PS 2 003 902). Die Stärke solcher Isolierplatten richtet sich im Hinblick auf die ungleichmässige Temperaturverteilung auf der Heizebene nach den Stellen höchster Temperatur, die sich naturgemäss direkt unterhalb der Heizrohre befinden. Dies bedeutet, dass die Dämmschicht an von den Heizrohren entfernteren Stellen übermässig stark ist. Besonders krasse Verhältnisse ergeben sich diesbezüglich bei den Isolierplatten mit in Nuten eingelegten Heizrohren, weil die Dämmschicht am Nutengrund, also da wo sie die grösste Wirkung haben sollte, am schwächsten ist. Infolgedessen wird für die Dämmschicht in der Regel viel mehr Material verwendet, als zur Erfüllung ihrer Aufgabe notwendig wäre.

Vorgefertigte Isolierplatten mit Nuten zur Aufnahme der Heizrohre haben ferner den Nachteil, dass dafür nur feste Dämm-Materialien in Frage kommen, die sich zum Einformen von Nuten eignen. Viele für die Bildung von Dämmschichten sonst geeignete und teils kostengünstigere Materialien fallen deshalb bei dieser Lösung ausser Betracht. Ausserdem ist nach dem Verlegen solcher vorgefertigter Isolierplatten eine nachträgliche Aenderung des Heizungskonzepts nicht mehr möglich, da die Anordnung der Heizrohre durch die vorhandenen Nuten bereits festgelegt ist.

Der Vorteil der Nutenplatten liegt vor allem darin, dass die Montage einer Bodenheizungsanlage mit derartigen Bauelementen ohne aufwendige Hilfsmittel durchführbar und zeitsparend ist, insbesondere dann, wenn die Wärmeleitbleche bereits in der Vorfertigung am oder im Bauelement fixiert werden, so dass die Heizrohre beim Einlegen in die Nuten der Bauelemente zugleich mit den Wärmeleitblechen in Klammerkontakt kommen (CH-PS 577 150).

Aufgabe der Erfindung war es, eine Bodenheizungsanlage der eingangs genannten Art zu schaffen, die es unter Vermeidung der Nachteile bekannter Lösungen ermöglicht, mit einem Minimum an Materialaufwand eine optimale Wärmedämmung zu erreichen, ohne auf den genannten Vorteil der Elementbauweise zu verzichten.

Diese Aufgabe wird erfindungsgemäss dadurch gelöst, dass die Dämmschicht im Bereich der Heizrohre und wenigstens zum Teil im Bereich der Wärmeleitbleche stärker ist als auf der übrigen Bodenheizfläche und dass der verstärkte Teil der Dämmschicht durch separate, längs der Heizrohre verlaufende Materialstreifen gebildet wird, die zugleich als Träger der an diesem befestigten Wärmeleitbleche dient.

Bei der erfindungsgemässen Lösung besteht also die Dämmschicht aus einer Grundschicht und aus einer Anzahl Materialstreifen, welche die Dämmschicht an den massgebenden Stellen
verstärken. Die Grundschicht hat vorzugsweise eine einheitliche Stärke, so dass sie aus handelsüblichem Isoliermaterial in Form von Platten oder Matten erstellt werden kann.
Dabei kann die Stärke der Grundschicht unter sonst gleichen
Bedingungen geringer sein als bei herkömmlichen Ausführungen
der Dämmschicht, da die separaten Materialstreifen den Wärmeabfluss nach unten im Bereich der Heizrohre und der Wärmeleitbleche zusätzlich hemmen. Die separaten, z.B. aus Kunststoff bestehenden Materialstreifen mit den an diesen befestigten Wärmeleitblechen liegen vorzugsweise lose auf der
Grundschicht, damit sie sich beim oder nach dem Verlegen der
Heizrohre seitlich verschieben lassen, um den gewünschten
Rohrabstand zu erzielen.

In der Zeichnung ist ein Ausführungsbeispiel der Erfindung
dargestellt, und zwar zeigen:

     Fig. 1 einen Querschnitt durch einen Teil der Bodenheizungsanlage und

     Fig. 2 schematisch einen Teil der Bodenheizungsanlage
          in einer Raumecke.

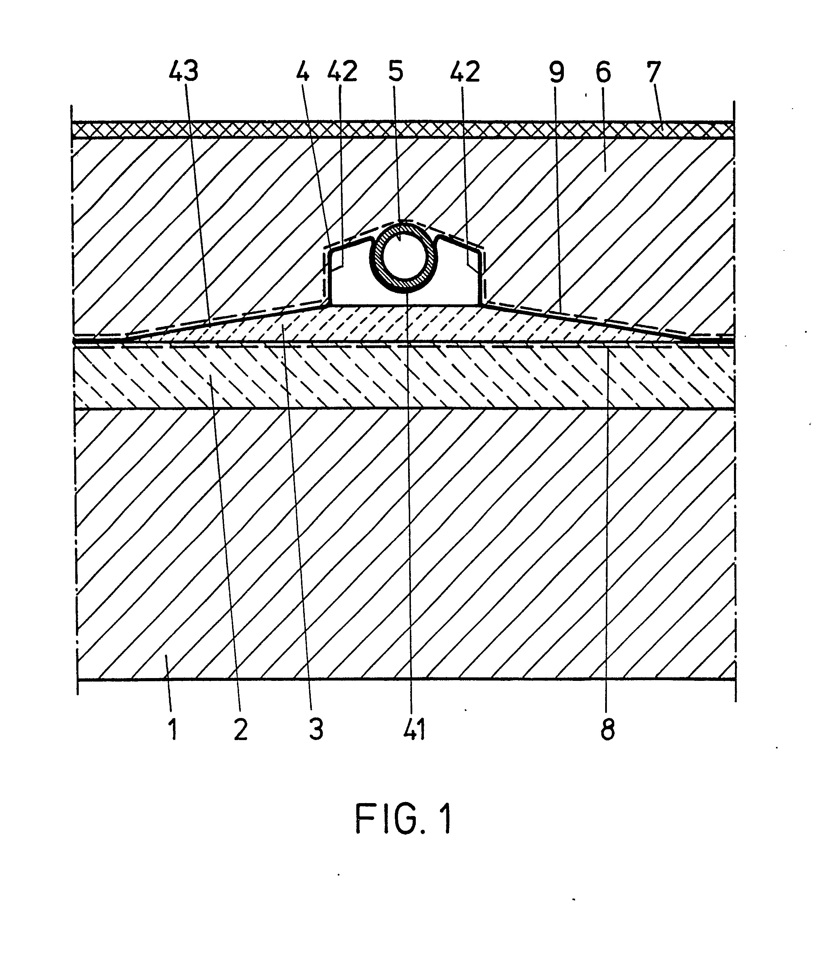

Gemäss Fig. 1 ist ein Heizrohr 5 mit einem an diesem festgeklemmten Wärmeleitblech 4 zwischen einer tragenden Decke 1
und einem Unterlagsboden 6 auf einer den Wärmeabfluss nach
unten hemmenden Dämmschicht 2,3 angeordnet. Diese Dämmschicht ist im Bereich des Heizrohres 5 und eines Teils des
Wärmeleitbleches 4 stärker als auf der übrigen Bodenheizfläche und besteht aus einer Grundschicht 2 von einheitlicher Stärke und einem separaten, den verstärkten Teil der
Dämmschicht bildenden Materialstreifen 3. Der letztere dient
zugleich als Träger des an diesem befestigten, z.B. angeklebten Wärmeleitbleches 4. Mit 7 ist der Bodenbelag bezeichnet.

Das Wärmeleitblech 4 weist einen das Heizrohr 5 von unten umklammernden Mittelteil 41 auf, von dem aus sich Lamellen 42 nach beiden Seiten erstrecken. Die Lamellen 42 sind mit Abstand vom Mittelteil 41 nach unten abgekröpft und liegen im anschliessenden flachen Teil 43 am Materialstreifen 3 an. Durch diese Formgebung der Lamellen 42 ist der Mittelteil 41 des Wärmeleitbleches 4 von einem wärmeisolierenden Luftpolster umgeben, das den Wärmeabfluss vom Heizrohr 5 nach unten und nach der Seite zusätzlich hemmt. Dadurch ergibt sich ein optimaler Wirkungsgrad der Wärmeübertragung vom Heizrohr 5 zum Wärmeleitblech 4.

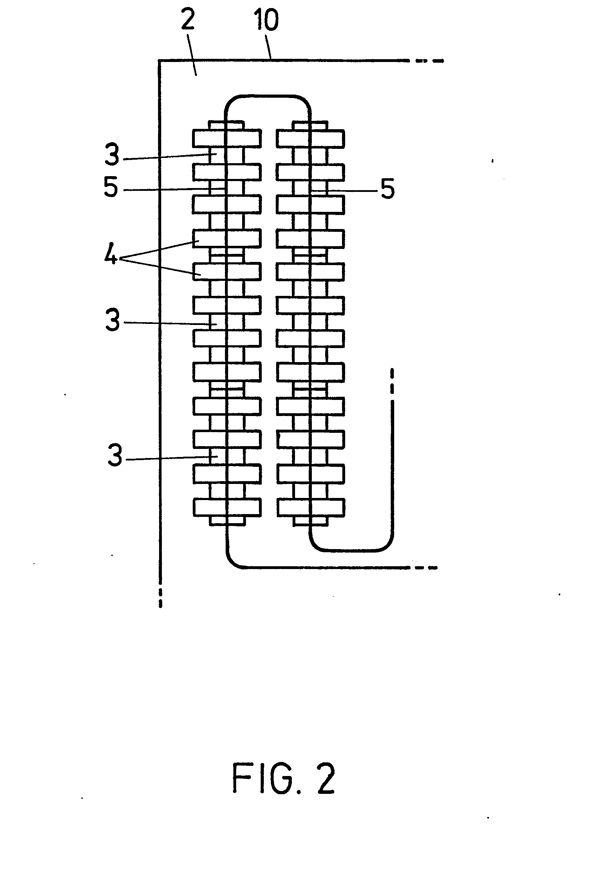

Die Fig. 2 zeigt eine beispielsweise Anordnung der Heizungselemente 4,5 am Boden einer Raumecke, deren Kontur mit 10 bezeichnet ist. An jedem der parallelen Heizrohre 5 ist eine Anzahl Wärmeleitbleche 4 festgeklemmt. Unterhalb jedes Heizrohres 5 sind mehrere wärmedämmende Materialstreifen 3 von einheitlicher Länge hintereinander auf der Grundschicht 2 angeordnet, welche jeweils mehrere, im dargestellten Beispiel je vier Wärmeleitbleche 4 tragen.

Bei der Montage der Heizungsanlage werden die Materialstreifen 3 mit den daran befestigten Wärmeleitblechen 4 entsprechend dem vorgesehenen Verlauf der Heizrohre auf der wärmedämmenden Grundschicht 2 ausgelegt. Danach werden die Heizrohre 5 verlegt, indem diese in die bereit liegenden Wärmeleitbleche 4 eingedrückt werden. Allfällige Lagefehler können durch Verschieben der Materialstreifen 3 korrigiert werden. Bei instabilen Rohren, z.B. bei solchen aus Kunststoff, kann der Rohrabstand durch Distanzhalter fixiert werden.

Die z.B. aus geschäumten Kunststoffprofilen bestehenden Materialstreifen 3, welche in Fig. 1 keilförmig dargestellt sind, können in einfacherer Weise auch eine rechteckige, flache Querschnittsform haben. Ausserdem können sie im Gegensatz zu der dargestellten Ausführungsform breiter sein, so dass sie sich bis an das Ende der Lamellen 42 erstrecken.

In Fig. 1 sind mit gestrichelten Linien zwei Schutzfolien 8 und 9 angedeutet. Die untere, z.B. auf Papier- oder Kunststoffbasis hergestellte Schutzfolie 8, welche die wärmedämmende Grundschicht 2 bedeckt, ist u.a. aus Festigkeitsgründen vorgesehen und soll verhindern, dass beim Aufbringen des Unterlagsbodens 6 Schall- oder Wärmeleitungsbrücken in der Dämmschicht entstehen. Aus Stein- oder Glasfasermatten bestehende Dämmschichten sind in der handelsüblichen Form bereits von einer solchen Schutzfolie umgeben.

Die zum Schutz der Heizungselemente 4,5 vorgesehene obere Schutzfolie 9 kann zusätzlich die Funktion einer Wärmedämmung gegenüber dem Unterlagsboden 6 erfüllen. Sie ist zu diesem Zweck mit einer Wärmedämmschicht versehen oder als solche ausgebildet. Durch Wahl des Materials und/oder der Stärke dieser Wärmedämmschicht kann der Wärmewiderstand zwischen den Wärmeleitblechen 4 und der Bodenoberfläche verändert und entsprechend der gewünschten Temperatur an der Oberfläche des Unterlagsbodens 6 eingestellt werden. Diese Massnahme ermöglicht eine universellere Anwendung von bestimmten, vorausberechneten Anordnungen der Heizungselemente 4,5. Ausserdem können auf diese Weise nachträgliche Aenderungswünsche hinsichtlich des Bodenbelages 7 (z.B. Teppich anstatt Steinplatten) noch nach dem Einbau der Heizungsanlage berücksichtigt werden. Die Wärmedämmschicht kann in einzelnen Bereichen, z.B. über den Heizrohren, verstärkt sein.

Patentansprüche

1. Bodenheizungsanlage, bei der Heizrohre mit an diesen festgeklemmten Wärmeleitblechen zwischen einer tragenden Decke und einem Unterlagsboden auf einer den Wärmeabfluss nach unten hemmenden Dämmschicht angeordnet sind, dadurch gekennzeichnet, dass die Dämmschicht (2, 3) im Bereich der Heizrohre (5) und wenigstens zum Teil im Bereich der Wärmeleitbleche (4) stärker ist als auf der übrigen Bodenheizfläche und dass der verstärkte Teil der Dämmschicht durch separate, längs der Heizrohre verlaufende Materialstreifen (3) gebildet wird, die zugleich als Träger der an diesem befestigten Wärmeleitbleche (4) dient.

2. Bodenheizungsanlage nach Anspruch 1, dadurch gekennzeichnet, dass die Dämmschicht (2, 3) eine Grundschicht (2) einheitlicher Stärke aufweist.

3. Bodenheizungsanlage nach Anspruch 2, dadurch gekennzeichnet, dass die Grundschicht (2) durch eine Schutzfolie (8) abgedeckt ist.

4. Bodenheizungsanlage nach Anspruch 1, dadurch gekennzeichnet, dass die Heizungselemente (4, 5) gesamthaft durch eine Schutzfolie (9) abgedeckt sind.

5. Bodenheizungsanlage nach Anspruch 4, dadurch gekennzeichnet, dass die die Heizungselemente (4, 5) abdeckende Schutzfolie (9) mit einer Wärmedämmschicht versehen oder als solche ausgebildet ist.

6. Bodenheizungsanlage nach Anspruch 1, dadurch gekennzeichnet, dass die Wärmeleitbleche (4) einen das Heizrohr (5) von unten umklammernden Mittelteil (41) aufweisen, von dem aus sich Lamellen (42) nach beiden Seiten erstrecken, welche mit Abstand vom Mittelteil nach unten abgekröpft sind und im anschliessenden flachen Teil (43) am Materialstreifen (3) anliegen, so dass der Mittelteil von einem wärmeisolierenden Luftpolster umgeben ist.

0103853

FIG. 1

- 2/2 -

0103853

FIG. 2